# FASCICULE DE BREVET EUROPEEN

(11) **EP 4 038 326 B1**
(45) Date de publication et mention de la délivrance du brevet: **17.04.2024**
(21) Numéro de dépôt: 20775199.1
(22) Date de dépôt: 08.09.2020
(51) Int. Cl.: F25B 5/04, F25B 9/00, F28D 20/00, B64D 27/24, F25D 19/00, H01F 6/00, H02K 55/00, H01F 6/04, F25B 1/10, F25B 9/06, F25B 25/00, F25B 40/00

(54) **DISPOSITIF DE MOTORISATION, VÉHICULE VOLANT ET PROCÉDÉ DE REFROIDISSEMENT D'UN MOTEUR**
ANTRIEBSVORRICHTUNG, FLIEGENDES FAHRZEUG UND VERFAHREN ZUR KÜHLUNG EINES MOTORS
DRIVE DEVICE, FLYING VEHICLE AND METHOD FOR COOLING AN ENGINE

(30) Priorité: 01.10.2019 FR 1910861
(43) Date de publication de la demande: 10.08.2022
(73) Titulaire: L'Air Liquide, société anonyme pour l'Étude et l'Exploitation des procédés Georges Claude, 75007 Paris (FR)
(72) Inventeur: STAEMPFLIN, Martin, 38360 Sassenage (FR); DELAUTRE, Guillaume, 38360 Sassenage (FR); JEUNESSE, Loïc, 38360 Sassenage (FR); ZIMMERMANN, Baptiste, 38360 Sassenage (FR)
(74) Mandataire: Air Liquide
(86) Numéro de dépôt international: PCT/EP2020/075042
(87) Numéro de publication internationale: WO 2021/063638

(56) Documents cités:
- JP-A- 2000 154 944
- JP-A- 2019 095 079
- US-A- 5 473 899
- PALMER JOSEPH ET AL: "Modelling of cryogenic cooling system design concepts for superconducting aircraft propulsion", IET ELECTRICAL SYSTEMS IN TRANSPORTATION, THE INSTITUTION OF ENGINEERING AND TECHNOLOGY, MICHAEL FARADAY HOUSE, SIX HILLS WAY, STEVENAGE, HERTS. SG1 2AY, UK, vol. 6, no. 3, 1 septembre 2016 (2016-09-01), pages 170-178, XP006058354, ISSN: 2042-9738, DOI: 10.1049/IET-EST.2015.0020
- SHAWYER ROGER ED - CARNELLI IAN ET AL: "Second generation EmDrive propulsion applied to SSTO launcher and interstellar probe", ACTA ASTRONAUTICA, PERGAMON PRESS, ELMSFORD, GB, vol. 116, 10 juillet 2015 (2015-07-10), pages 166-174, XP029277761, ISSN: 0094-5765, DOI: 10.1016/J.ACTAASTRO.2015.07.002
- RADEBAUGH R: "ADVANCES IN CRYOCOOLERS", PROCEEDINGS OF THE INTERNATIONAL CRYOGENIC ENGINEERING CONFERENCE, XX, XX, 20 mai 1996 (1996-05-20), pages 33-44, XP008026238,

## Description

L'invention concerne un dispositif de motorisation, un véhicule volant et un procédé de refroidissement d'un moteur.

L'invention concerne plus particulièrement un dispositif de motorisation, notamment pour véhicule volant tel qu'un aéronef ou un engin spatial, comprenant au moins un moteur et un dispositif de refroidissement du moteur, le dispositif de refroidissement du moteur comprenant un réfrigérateur cryogénique, c'est-à-dire à une température comprise entre moins 100 degrés centigrade et moins 273 degrés centigrade, le réfrigérateur comprenant un circuit de travail formant une boucle et contenant un fluide de travail, le circuit de travail formant un cycle comprenant en série: un mécanisme de compression du fluide de travail, un mécanisme de refroidissement du fluide de travail, un mécanisme de détente du fluide de travail et un mécanisme de réchauffement du fluide de travail, le réfrigérateur comprenant une portion d'échange de chaleur entre le fluide de travail détendu dans le mécanisme de détente et le moteur, le réfrigérateur étant configuré pour produire une première puissance de réfrigération maximale déterminée.

Pour refroidir des moteurs, notamment de type supraconducteur, il est connu d'utiliser un réfrigérateur de type cryogénique, c'est-à-dire permettant d'atteindre une température cryogénique comprise par exemple entre-100 degrés centigrade et moins 273 degrés centigrade. Un réfrigérateur cryogénique est connu du document JP 2000 154944 A.

L'intégration d'un tel réfrigérateur dans un véhicule, notamment volant, est soumise à des contraintes de masses.

Pour optimiser la masse d'un tel réfrigérateur, le réfrigérateur peut être du type utilisant un circuit d'un fluide de travail réalisant un cycle thermodynamique de type Brayton-Inverse fermé. Ce cycle récupératif peut utiliser des compresseurs centrifuges pour une compression du fluide de travail, au moins un échangeur de chaleur à contre-courant, notamment du type à tube et calandre (pour le refroidissement après la compression et le réchauffage après la détente), une ou des turbines de détente centripète et des alternateurs.

Cette architecture, bien qu'ayant une structure optimisée par rapport à des réfrigérateurs industriels, reste encore trop massive pour certaines applications d'aéronefs ou équivalent. Ainsi, pour fournir une puissance froide de l'ordre de 1kW à une température de 25K (typiquement le besoin de puissance froide pour un moteur supraconducteur de puissance d'environ 1MW) la masse d'un tel réfrigérateur peut atteindre 250kg. Bien qu'inférieure d'au moins un ordre de grandeur par rapport à la masse d'un réfrigérateur industriel, elle représente tout de même encore plusieurs fois la masse du moteur lui-même.

Un but de la présente invention est de pallier tout ou partie des inconvénients de l'art antérieur relevés ci-dessus.

A cette fin, le dispositif selon l'invention comprend toutes les caractéristiques de la revendication indépendante 1 annexée.

Cette structure permet de dimensionner le réfrigérateur cryogénique pour la phase d'utilisation usuelle et éventuellement la plus longue (vol de croisière dans le cas d'un aéronef par exemple) qui peut avoir un besoin de refroidissement moindre par rapport à d'autres phases de fonctionnement ponctuelles (décollage par exemple).

Ceci permet de réduire la masse du réfrigérateur cryogénique embarqué, par exemple de près de 50%, ainsi que de réduire sa puissance électrique d'alimentation de près de 35% pendant les phases de fonctionnement concernées.

Par ailleurs, des modes de réalisation de l'invention peuvent comporter les caractéristiques indiquées par les revendications dépendantes annexées.

L'invention concerne également un véhicule volant comme défini par la revendication dépendante 11 annexée. L'invention concerne également un procédé de refroidissement d'au moins un moteur de véhicule selon la revendication indépendante 15 annexée.

Selon d'autres particularités possibles :
- la première phase de fonctionnement du véhicule a une première durée déterminée, par exemple pendant une phase de décollage comprise entre une et dix minutes, la seconde phase de fonctionnement comprend par exemple une phase de vol stabilisé ayant une seconde durée comprise entre cinq minutes et plusieurs heures.

D'autres particularités et avantages apparaîtront à la lecture de la description ci-après, faite en référence aux figures dans lesquelles :
[Fig. 1] représente une vue schématique et partielle illustrant un premier exemple de structure et de fonctionnement du dispositif, qui ne fait pas partie de l'invention mais qui est utile pour la compréhension de l'invention,
[Fig. 2] représente un exemple de variation de la puissance de réfrigération fournie par le dispositif au cours du temps,
[Fig. 3] représente une vue schématique et partielle illustrant un deuxième exemple de structure et de fonctionnement du dispositif de l'invention,
[Fig. 4] représente une vue schématique et partielle illustrant un troisième exemple de structure et de fonctionnement du dispositif, qui ne fait pas partie de l'invention mais qui est utile pour la compréhension de l'invention.

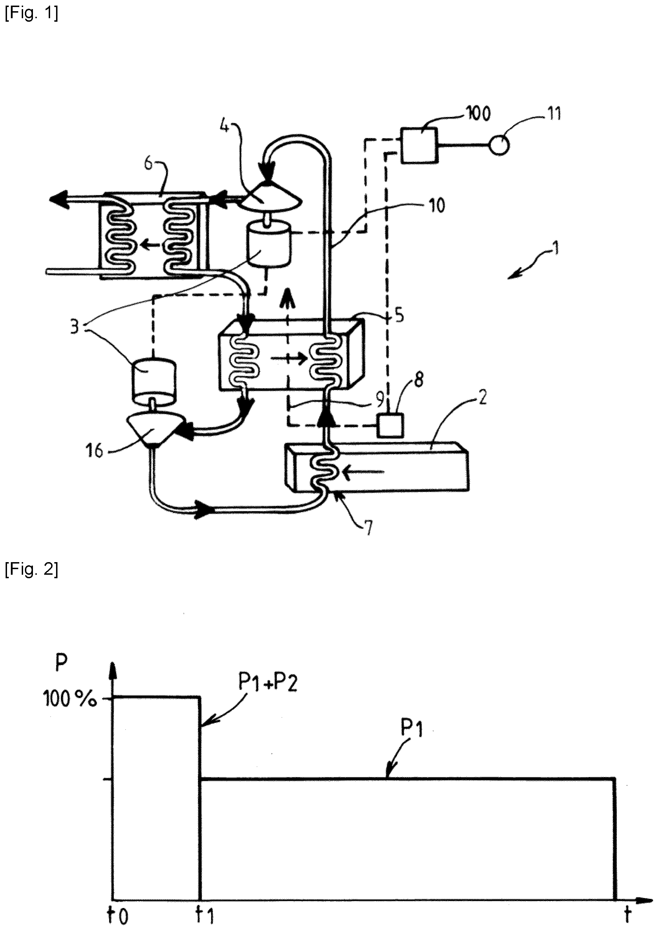

Le dispositif 1 de motorisation, notamment pour véhicule volant tel qu'un aéronef ou un engin spatial, représenté à la [Fig. 1] comprend un moteur 2 et un dispositif de refroidissement du moteur 2. Le dispositif de refroidissement du moteur 2 comprend un réfrigérateur cryogénique, c'est-à-dire refroidissant un fluide de travail à une température comprise entre moins 100 degrés centigrade et moins 273 degrés centigrade. Le réfrigérateur comprend un circuit 10 de travail formant une boucle (de préférence fermée et hermétique) et contenant un fluide de travail. Ce fluide de travail peut être de l'hélium, de l'hydrogène ou tout autre gaz ou mélange (par exemple hélium et azote ou hélium et argon ou hélium et néon ou hélium et azote et argon ou hélium et azote et néon...) .

Le circuit 10 de travail forme un cycle comprenant en série: un mécanisme 4 de compression du fluide de travail, un mécanisme 6 de refroidissement du fluide de travail comprimé, un mécanisme 16 de détente du fluide de travail et un mécanisme 5, 7 de réchauffement du fluide de travail détendu. En aval de la portion de détente 16, le circuit comporte de préférence une portion 7 d'échange de chaleur entre le fluide de travail froid détendu dans le mécanisme 16 de détente et le moteur 2. Cette portion 7 d'échange peut comporter notamment un échangeur de chaleur entre le fluide de travail et le moteur 2.

Comme illustré, le réfrigérateur peut comprendre un échangeur de chaleur 6 de refroidissement refroidissant le fluide de travail en sortie du compresseur 4 (par exemple par échange de chaleur avec de l'eau, de l'air ou un autre caloporteur). Ceci permet de réaliser une compression isotherme ou sensiblement isotherme (ou compression isentropique ou sensiblement isentropique).

Comme schématisé par des pointillés, la turbine 16 et le compresseur 4 peuvent être monté (accouplés directement) au niveau respectivement des deux extrémités de l'arbre d'entraînement d'un moteur 3 d'entraînement à haute vitesse (10000 tours par minute ou plusieurs dizaines ou plusieurs centaines de milliers de tours par minute).

Alternativement, les turbines et compresseurs peuvent être découplées pour pouvoir tourner à des vitesses de rotation différentes (notamment entre deux cent mille et trois cent mille tours par minute pour les turbines et cent cinquante mille tours par minute pour les compresseurs). Dans ce dernier cas, la turbine 16 peut être reliée à un alternateur qui permet de récupérer l'énergie de détente, énergie qui une fois transformée en électricité peut servir à alimenter le moteur du compresseur 4. De préférence les compresseur (s) 4 et turbine(s) 6 sont montés sur l'arbre via des paliers statiques, magnétiques ou dynamiques à gaz.

Ce réfrigérateur est configuré pour produire une première puissance P1 de réfrigération maximale déterminée.

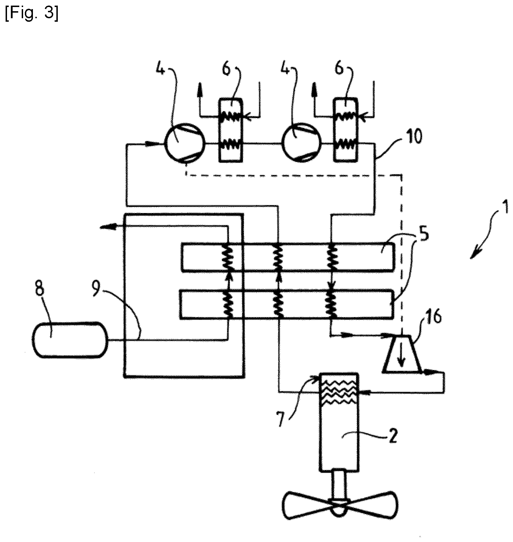

Le dispositif de refroidissement du moteur 2 comprend en outre un système de réfrigération additionnel. Ce système de réfrigération additionnel est distinct du mécanisme 6 de refroidissement du gaz de travail et distinct également du fluide de travail et du circuit 10 de travail correspondant. Ce système de réfrigération additionnel comprenant dans l'exemple de la figure 3 un stockage ou réservoir 8 de fluide cryogénique et un circuit 9 de transfert permettant, si besoin, un échange en thermique du fluide cryogénique avec le réfrigérateur et optionnellement le moteur 2. Ce système de réfrigération additionnel est configuré pour fournir une seconde puissance P2 de réfrigération maximale déterminée au réfrigérateur et au moteur 2 si besoin c'est-à-dire que le stockage 8 et le circuit 9 de transfert sont distincts du circuit de travail et du mécanisme de refroidissement du fluide de travail (en sortie de compression). Ce circuit de transfert 9 est configuré pour permettre de fournir une puissance de réfrigération supplémentaire en cas de besoin uniquement (par exemple de façon intermittente).

Le système de réfrigération additionnel est commutable entre au moins une première configuration fournissant la seconde puissance P2 de réfrigération maximale déterminée au réfrigérateur et une seconde configuration fournissant au réfrigérateur une puissance de refroidissement nulle

Ainsi, le système de réfrigération additionnel est configuré pour permettre d'augmenter ponctuellement la puissance de réfrigération du dispositif de refroidissement du moteur 2. C'est-à-dire que la première puissance P1 de réfrigération maximale déterminée est inférieure à la somme de la première puissance P1 de réfrigération maximale déterminée et de la seconde puissance P2 de réfrigération maximale.

Ceci est schématisé à titre d'exemple à la [Fig. 2]. Par exemple, le réfrigérateur cryogénique est dimensionné pour fournir la puissance froide maximale correspondante au mode de fonctionnement le plus fréquent, par exemple, la phase la plus longue du vol de l'engin (vol croisière). La première puissance P1 de réfrigération est celle nécessaire pour refroidir le moteur 2 pendant la phase de croisière du vol (à partir de t1). Elle peut correspond à 50 à 70% de la puissance froide nécessaire au décollage (100% entre to et t1). Ainsi, pendant la phase la plus gourmande en puissance froide (par exemple décollage dont la durée t1-t0 est généralement inférieure à 5mn), le dispositif de refroidissement utilisera alors à ce moment-là en plus le système de réfrigération additionnel. Par exemple, de l'hydrogène liquide (stocké à une température d'environ 25 K) ou un autre fluide (azote, hélium, néon...) peut être injecté dans le cycle du circuit 10 de travail. Ce liquide cryogénique se réchauffe en remontant à travers l'échangeur 5 de chaleur en refroidissant le fluide de travail dans le cycle. Par exemple le système de réfrigération additionnel est en échange thermique via le circuit 9 de transfert avec au moins un échangeur 5 de chaleur principal (par exemple à contre-courant) du circuit 10 de travail.

Le fluide réchauffé éventuellement vaporisé peut être évacué vers l'extérieur dans une zone de récupération par exemple, vers une pile à combustible qui récupère l'hydrogène pour générer de l'électricité lorsque ce fluide est utilisé.

Dans le cas d'un aéronef, la puissance froide nécessaire au cours d'un vol peut être très variable. Comme illustré, elle peut être maximale au décollage (phase d'une durée de quelques minutes) puis peut diminue d'environ 30 à 50% pour le reste du vol (qui peut durer plusieurs heures). Le dispositif peut répondre à ces besoins tout en étant optimisé en masse.

Dans le cas d'une puissance de réfrigération de 1kW à 25K nécessaire pendant le décollage (P1+P2=100%) pendant par exemple cinq minutes et une puissance de réfrigération nécessaire moindre ensuite : 665W à 25K pendant le reste du vol (P1=70%), la quantité (masse) d'hydrogène liquide (ou autre liquide cryogénique) nécessaire est relativement faible, notamment moins de 200g. Le débit associé peut être inférieur à 1g/s.

Ainsi, contrairement à un réfrigérateur classique seul ayant une puissance électrique d'environ 46kW et une masse optimisée (hors châssis, câbles d'alimentation et armoires de puissance et de commande) de l'ordre de 250kg, le réfrigérateur cryogénique du dispositif selon l'invention pourrait avoir une masse diminuée jusqu'à 130kg environ pour une puissance électrique maximale de 30kW environ. Ainsi, en injectant une quantité très faible d'hydrogène liquide (ou autre fluide très froid) dans le cycle du circuit de travail pendant une durée d'environ cinq minutes, on arrive donc à réduire de près de 50% la masse du réfrigérateur cryogénique embarqué.

Comme illustré, le circuit 9 de transfert du système de réfrigération additionnel comprend de préférence une portion en échange thermique avec le circuit 10 du fluide de travail, notamment avec au moins un échangeur 6 de chaleur de réchauffage et/ou de refroidissement du fluide de travail.

Bien entendu, l'invention n'est définie que par les revendications indépendantes annexées. Comme illustré à titre d'exemple à la [Fig. 3], le circuit 10 de travail peut comprendre plusieurs échangeurs 6 de chaleur de réchauffement et de refroidissement du fluide de travail (échangeurs de chaleur à contre-courant) disposés en série. Le circuit 9 de transfert du système de réfrigération additionnel peut comprendre une portion en échange thermique avec tout ou partie desdits échangeurs 6 de chaleur en série.

Le circuit 9 de transfert du système de réfrigération additionnel comprend, comme prévu par l'invention, une extrémité amont reliée au stockage 8 de fluide cryogénique et une extrémité aval reliée à une zone de décharge. Comme évoqué ci-dessus, cette zone de décharge peut comprendre par exemple une entrée de pile à combustible (pour y recycler le gaz lorsque c'est de l'hydrogène par exemple) ou une chambre de combustion lorsque le fluide est un combustible (cas de l'hydrogène notamment).

Comme schématisé à la [Fig. 1], le dispositif ou véhicule peut comporter un contrôleur 100 électronique relié au dispositif de refroidissement du moteur 2 et configuré pour commander la puissance de réfrigération du système de réfrigération additionnel et éventuellement du réfrigérateur fournie(s) au moteur 2. Par exemple, le contrôleur 100 électronique comprend un microprocesseur et/ou contrôleur et/ou un ordinateur et est configuré (programmé) pour piloter tout ou partie des composants du dispositif, notamment une vanne 12 de contrôle du débit dans le circuit 9 de transfert.

Le contrôleur 100 électronique peut notamment être configuré pour réguler le niveau de puissance de réfrigération du réfrigérateur et notamment du système de réfrigération additionnel en fonction d'un signal 11 de consigne, par exemple transmis par le moteur 2 ou un autre organe du véhicule ou du dispositif (signal de consigne en fonction de la phase d'utilisation ou du besoin en réfrigération du moteur 2).

De même, comme illustré, le réfrigérateur cryogénique peut comporter plusieurs compresseurs 4 en série (deux dans l'exemple de la [Fig. 3] mais un, deux, trois ou plus de quatre est envisageable) et une ou plusieurs turbines 16 (deux, trois ou plus de quatre est envisageable en série et/ou en parallèle). De même comme illustré, un échangeur 16 de refroidissement du fluide de travail peut être prévu en sortie de chaque compresseur 4 ou en sortie de certains d'entre eux seulement. De préférence, le circuit de travail soumet le fluide de travail à un cycle thermodynamique de type Brayton inverse.

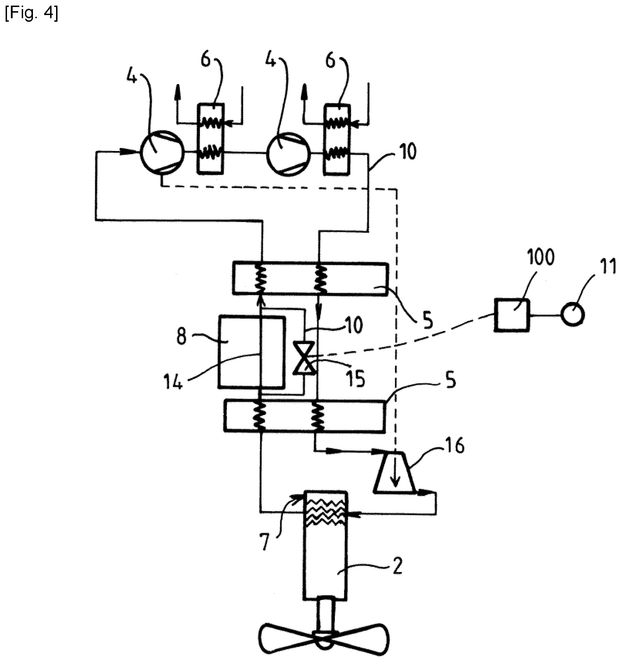

Le mode de réalisation de la [Fig. 4], qui ne fait pas partie de l'invention mais qui est utile pour la compréhension de l'invention, se distingue de celui de la [Fig. 3] uniquement en ce que le système de réfrigération additionnel comprend un stockage 8 de fluide cryogénique (de préférence contenant du gaz à l'état solide : néon ou tout autre gaz ou mélange de gaz approprié) et une portion 14 de dérivation du circuit 10 de travail en échange thermique avec le fluide cryogénique du stockage 8 associée à un système 15 de répartition d'au moins une partie du fluide de travail du circuit 10 de travail dans ladite portion 14 de dérivation.

Par exemple, la portion 14 de dérivation transite dans le stockage 8 de fluide cryogénique. Le système 15 de répartition peut comprendre au moins une vanne qui, selon son état (fermé/ouvert) fait transiter ou non le fluide de travail du circuit 10 de travail dans le stockage 8 pour le refroidir ce dernier par échange de chaleur avec le fluide cryogénique du stockage 8. Par exemple, le système 15 de répartition peut être de type tout ou rien ou progressif c'est-à-dire assurant une répartition d'une fraction seulement de fluide de travail via le stockage 8 de fluide cryogénique pour réguler la quantité de froid apportée au réfrigérateur. Le système de répartition peut être piloté par le contrôleur 100 électronique.

Comme illustré, le stockage 8 de fluide cryogénique peut être interposé entre deux échangeurs 5 de chaleur du réfrigérateur, pour assurer, lorsque nécessaire, un refroidissement supplémentaire du fluide de travail dans son cycle. L'invention peut s'appliquer au refroidissement de tout autre organe ou appareil qu'un moteur de véhicule. En particulier, le mode de réalisation utilisant un stockage de fluide cryogénique contenant du gaz à l'état solide peut être utilisé pour suppléer la puissance de réfrigération d'un réfrigérateur cryogénique. Le réfrigérateur cryogénique peut de ce fait être optimisé (masse notamment). Ceci permet, lorsque la masse est une contrainte pour réfrigérateur cryogénique (cryocooler), et que, selon les phases de fonctionnement, des puissances froides plus ou moins importantes sont nécessaires, de dimensionner le réfrigérateur pour la puissance froide la plus faible et d'avoir une source froide additionnelle pour les phases nécessitant une puissance froide plus importante.

## Revendications

1. Dispositif de motorisation, notamment pour véhicule volant tel qu'un aéronef ou un engin spatial, comprenant au moins un moteur (2) et un dispositif de refroidissement du moteur (2), le dispositif de refroidissement du moteur (2) comprenant un réfrigérateur cryogénique, c'est-à-dire à une température comprise entre moins 100 degrés centigrade et moins 273 degrés centigrade, le réfrigérateur comprenant un circuit (10) de travail formant une boucle et contenant un fluide de travail, le circuit (10) de travail formant un cycle comprenant en série: un mécanisme (4) de compression du fluide de travail, un mécanisme (5) de refroidissement du fluide de travail, un mécanisme (16) de détente du fluide de travail et un mécanisme (5, 7) de réchauffement du fluide de travail, le réfrigérateur comprenant une portion (7) d'échange de chaleur entre le fluide de travail détendu dans le mécanisme (16) de détente et le moteur (2), le réfrigérateur étant configuré pour produire une première puissance (P1) de réfrigération maximale déterminée, où le dispositif de refroidissement du moteur (2) comprend en outre un système de réfrigération additionnel distinct du mécanisme (5) de refroidissement du fluide de travail et distinct du fluide de travail comprenant un stockage (8) de fluide cryogénique comprenant un fluide liquéfié et/ou à l'état solide pouvant être mis en échange en thermique avec le réfrigérateur, et optionnellement le moteur (2), le système de réfrigération additionnel comprenant un circuit (9) de transfert du fluide cryogénique en échange thermique avec le réfrigérateur, et optionnellement le moteur (2), le circuit (9) de transfert du système de réfrigération additionnel comprenant une portion en échange thermique avec le circuit (10) du fluide de travail, avec au moins un échangeur (5) de chaleur de réchauffage et/ou de refroidissement du fluide de travail du circuit (10) de travail le système de réfrigération additionnel étant configuré pour fournir une seconde puissance (P2) de réfrigération maximale déterminée au réfrigérateur et au moteur (2), lorsque le fluide cryogénique est mis en échange en thermique avec le réfrigérateur, et optionnellement le moteur (2), **caractérisé en ce que** le système de réfrigération additionnel est commutable entre une première configuration fournissant, pendant l'opération du dispositif de motorisation, la seconde puissance (P2) de réfrigération maximale au réfrigérateur via l'injection de fluide cryogénique pour l'échange thermique avec le au moins un échangeur (5) de chaleur et une seconde configuration fournissant, pendant l'opération du dispositif de motorisation, au réfrigérateur une puissance de refroidissement nulle via la non injection de fluide et pas d'échange thermique avec l'échangeur (5).

2. Dispositif selon la revendication 1, **caractérisé en ce que** le circuit (10) de travail comprend plusieurs échangeurs (5) de chaleur de réchauffement et/ou de refroidissement du fluide de travail disposés en série et **en ce que** le circuit (9) de transfert du système de réfrigération additionnel comprend une portion en échange thermique avec lesdits échangeurs (5) de chaleur en série.

3. Dispositif selon l'une quelconque des revendications 1 à 2, **caractérisé en ce que** le circuit (9) de transfert du système de réfrigération additionnel comprend une extrémité amont reliée au stockage (8) de fluide cryogénique et une extrémité aval reliée à une zone de décharge.

4. Dispositif selon l'une quelconque des revendication 1 à 3, **caractérisé en ce que** le système de réfrigération additionnel comprend une portion (14) de dérivation du circuit (10) de travail en échange thermique avec le fluide cryogénique du stockage (8) et un système (15) de répartition d'au moins une partie du fluide de travail du circuit (10) de travail dans ladite portion (14) de dérivation.

5. Dispositif selon l'une quelconque des revendications 1 à 4, **caractérisé en ce que** le système de réfrigération additionnel est configuré pour augmenter ponctuellement la puissance de réfrigération du dispositif de refroidissement du moteur (2), c'est-à-dire que la première puissance (P1) de réfrigération maximale est inférieure à la somme de la première puissance (P1) de réfrigération maximale et de la seconde puissance (P2) de réfrigération maximale.

6. Dispositif selon l'une quelconque des revendications 1 à 5, **caractérisé en ce que** la première puissance (P1) de réfrigération maximale et comprise entre 40 et 80% et de préférence entre 50 et 70% de la somme de la première puissance (P1) de réfrigération maximale et de la seconde puissance (P2) de réfrigération maximale.

7. Dispositif selon l'une quelconque des revendications 1 à 6, **caractérisé en ce que** le stockage (8) de fluide cryogénique du système de réfrigération additionnel contient au moins l'un parmi : de l'hydrogène, de l'azote , du néon , de l'hélium à l'état liquide et/ou solide.

8. Dispositif selon l'une quelconque des revendications 1 à 7, **caractérisé en ce que** le moteur (2) est du type supraconducteur.

9. Dispositif selon l'une quelconque des revendications 1 à 8, **caractérisé en ce qu'**il comporte un contrôleur (100) électronique relié au dispositif de refroidissement du moteur (2) et configuré pour commander la puissance de réfrigération du réfrigérateur et du système de réfrigération additionnel fourni au moteur (2).

10. Dispositif selon la revendication 9, **caractérisé en ce que** le contrôleur (100) électronique est configuré pour réguler le niveau de puissance de réfrigération du réfrigérateur et du système de réfrigération additionnel en fonction d'un signal (11) de consigne.

11. Véhicule volant comprenant un dispositif de motorisation conforme à l'une quelconque des revendications 1 à 10.

12. Véhicule selon la revendication 11, **caractérisé en ce que** le dispositif de refroidissement du moteur (2) est configuré pour fournir une première quantité de froid (P1+P2) pour refroidir le moteur (2) pendant une première phase de fonctionnement du véhicule, notamment pendant une phase de décollage, et pour fournir une seconde quantité de froid (P1) pour refroidir le moteur (2) pendant une seconde phase de fonctionnement du véhicule, notamment pendant une phase de vol stabilisé, la première quantité de froid (P1+P2) étant supérieure à la seconde quantité de froid (P1).

13. Véhicule selon la revendication 12, **caractérisé en ce que** la première quantité de froid (P1+P2) est fournie par le réfrigérateur et éventuellement le système de réfrigération additionnel, la seconde quantité de froid (P1) est fournie par le réfrigérateur et éventuellement le système de réfrigération additionnel.

14. Véhicule selon la revendication 12 ou 13, **caractérisé en ce que** la première quantité de froid est la somme de la première puissance (P1) de réfrigération maximale fournie par le réfrigérateur et de la seconde puissance (P2) de réfrigération maximale fournie par le système de réfrigération additionnel, la seconde quantité de froid étant constituée uniquement de la première puissance (P1) de réfrigération maximale fournie par le réfrigérateur.

15. Procédé de refroidissement d'au moins un moteur de véhicule selon l'une quelconque des revendications 12 à 14, le procédé comprenant une étape de refroidissement du moteur avec une première quantité de froid (P1+P2) pendant une première phase de fonctionnement du véhicule et une étape de refroidissement du moteur avec une seconde quantité de froid (P1) pendant une seconde phase de fonctionnement du véhicule, la première quantité de froid étant supérieure à la seconde quantité de froid et en ce que la première phase de fonctionnement du véhicule est située chronologiquement avant ou après la seconde phase de fonctionnement du véhicule.

16. Procédé selon la revendication 15 **caractérisé en ce que** la première phase de fonctionnement du véhicule a une première durée déterminée, par exemple pendant une phase de décollage comprise entre une et dix minutes, la seconde phase de fonctionnement comprend par exemple une phase de vol stabilisé ayant une seconde durée comprise entre cinq minutes et plusieurs heures.

## Patentansprüche

1. Antriebsvorrichtung, insbesondere für ein fliegendes Fahrzeug, wie etwa ein Luftfahrzeug oder ein Raumfahrzeug, die mindestens einen Motor (2) und eine Kühlvorrichtung für den Motor (2) beinhaltet, wobei die Kühlvorrichtung für den Motor (2) einen Kryokühler beinhaltet, das heißt mit einer Temperatur zwischen minus 100 Grad Celsius und minus 273 Grad Celsius, wobei der Kühler einen Arbeitskreislauf (10) beinhaltet, der eine Schleife bildet und ein Arbeitsfluid enthält, wobei der Arbeitskreislauf (10) einen Ring bildet, der Folgendes in Reihe beinhaltet: einen Mechanismus (4) zum Komprimieren des Arbeitsfluids, einen Mechanismus (5) zum Kühlen des Arbeitsfluids, einen Mechanismus (16) zum Entspannen des Arbeitsfluids und einen Mechanismus (5, 7) zum Erwärmen des Arbeitsfluids, wobei der Kühler einen Abschnitt (7) zum Wärmeaustausch zwischen dem in dem Entspannungsmechanismus (16) entspannten Arbeitsfluid und dem Motor (2) beinhaltet, wobei der Kühler dazu konfiguriert ist, eine erste bestimmte maximale Kühlleistung (P1) zu produzieren, wobei die Kühlvorrichtung für den Motor (2) ferner ein zusätzliches Kühlsystem beinhaltet, das von dem Kühlmechanismus (5) des Arbeitsfluids getrennt ist und von dem Arbeitsfluid getrennt ist und einen Speicher (8) für ein kryogenes Fluid beinhaltet, der ein verflüssigtes und/oder sich im Festzustand befindliches Fluid beinhaltet, das in einen Wärmeaustausch mit dem Kühler und optional dem Motor (2) gebracht werden kann, wobei das zusätzliche Kühlsystem einen Transferkreislauf (9) für das kryogene Fluid in einem Wärmeaustausch mit dem Kühler und optional dem Motor (2) beinhaltet, wobei der Transferkreislauf (9) des zusätzlichen Kühlsystems einen Abschnitt in einem Wärmeaustausch mit dem Kreislauf (10) des Arbeitsfluids, mit mindestens einem Wärmetauscher (5) zum Erwärmen und/oder Kühlen des Arbeitsfluids des Arbeitskreislaufs (10), beinhaltet, wobei das zusätzliche Kühlsystem dazu konfiguriert ist, dem Kühler und dem Motor (2) eine zweite bestimmte maximale Kühlleistung (P2) bereitzustellen, wenn das kryogene Fluid mit dem Kühler und optional dem Motor (2) in einen Wärmeaustausch gebracht wird, **dadurch gekennzeichnet, dass** das zusätzliche Kühlsystem zwischen einer ersten Konfiguration, die während des Betriebs der Antriebsvorrichtung mittels Einspritzung von kryogenem Fluid für den Wärmeaustausch mit dem mindestens einen Wärmetauscher (5) dem Kühler die zweite maximale Kühlleistung (P2) bereitstellt, und einer zweiten Konfiguration, die während des Betriebs der Antriebsvorrichtung mittels Nicht-Einspritzung von Fluid und keinem Wärmeaustausch mit dem Tauscher (5) dem Kühler eine Kühlleistung von Null bereitstellt, umschaltbar ist.

2. Vorrichtung nach Anspruch 1, **dadurch gekennzeichnet, dass** der Arbeitskreislauf (10) mehrere Wärmetauscher (5) zum Erwärmen und/oder Kühlen des Arbeitsfluids, die in Reihe angeordnet sind, beinhaltet und dass der Transferkreislauf (9) des zusätzlichen Kühlsystems einen Abschnitt in einem Wärmeaustausch mit den in Reihe angeordneten Wärmetauschern (5) beinhaltet.

3. Vorrichtung nach einem beliebigen der Ansprüche 1 bis 2, **dadurch gekennzeichnet, dass** der Transferkreislauf (9) des zusätzlichen Kühlsystems ein stromaufwärtiges Ende, das mit dem Speicher (8) für kryogenes Fluid verbunden ist, und ein stromabwärtiges Ende, das mit einem Auslassbereich verbunden ist, beinhaltet.

4. Vorrichtung nach einem beliebigen der Ansprüche 1 bis 3, **dadurch gekennzeichnet, dass** das zusätzliche Kühlsystem einen Bypassabschnitt (14) des Arbeitskreislaufs (10) in einem Wärmeaustausch mit dem kryogenen Fluid des Speichers (8) und ein System (15) zur Verteilung mindestens eines Teils des Arbeitsfluids des Arbeitskreislaufs (10) in den Bypassabschnitt (14) beinhaltet.

5. Vorrichtung nach einem beliebigen der Ansprüche 1 bis 4, **dadurch gekennzeichnet, dass** das zusätzliche Kühlsystem dazu konfiguriert ist, die Kühlleistung der Kühlvorrichtung für den Motor (2) punktuell zu erhöhen, das heißt, dass die erste maximale Kühlleistung (P1) kleiner ist als die Summe aus der ersten maximalen Kühlleistung (P1) und der zweiten maximalen Kühlleistung (P2) .

6. Vorrichtung nach einem beliebigen der Ansprüche 1 bis 5, **dadurch gekennzeichnet, dass** die erste maximale Kühlleistung (P1) zwischen 40 und 80 % und vorzugsweise zwischen 50 und 70 % der Summe aus der ersten maximalen Kühlleistung (P1) und der zweiten maximalen Kühlleistung (P2) beträgt.

7. Vorrichtung nach einem beliebigen der Ansprüche 1 bis 6, **dadurch gekennzeichnet, dass** der Speicher (8) für kryogenes Fluid des zusätzlichen Kühlsystems mindestens eines von Folgendem enthält: Wasserstoff, Stickstoff, Neon, Helium in flüssigem und/oder festem Zustand.

8. Vorrichtung nach einem beliebigen der Ansprüche 1 bis 7, **dadurch gekennzeichnet, dass** der Motor (2) vom Typ supraleitend ist.

9. Vorrichtung nach einem beliebigen der Ansprüche 1 bis 8, **dadurch gekennzeichnet, dass** sie eine elektronische Steuerung (100) umfasst, die mit der Kühlvorrichtung für den Motor (2) verbunden ist und dazu konfiguriert ist, die Kühlleistung des Kühlers und des zusätzlichen Kühlsystems, die dem Motor (2) bereitgestellt wird, zu steuern.

10. Vorrichtung nach Anspruch 9, **dadurch gekennzeichnet, dass** die elektronische Steuerung (100) dazu konfiguriert ist, das Kühlleistungsniveau des Kühlers und des zusätzlichen Kühlsystems in Abhängigkeit von einem Sollwertsignal (11) zu regeln.

11. Fliegendes Fahrzeug, das eine Antriebsvorrichtung gemäß einem beliebigen der Ansprüche 1 bis 10 beinhaltet.

12. Fahrzeug nach Anspruch 11, **dadurch gekennzeichnet, dass** die Kühlvorrichtung für den Motor (2) dazu konfiguriert ist, während einer ersten Betriebsphase des Fahrzeugs, insbesondere während einer Phase des Abhebens, eine erste Kältemenge (P1+P2) zum Kühlen des Motors (2) bereitzustellen und während einer zweiten Betriebsphase des Fahrzeugs, insbesondere während einer Phase eines stabilen Flugs, eine zweite Kältemenge (P1) zum Kühlen des Motors (2) bereitzustellen, wobei die erste Kältemenge (P1+P2) größer ist als die zweite Kältemenge (P1) .

13. Fahrzeug nach Anspruch 12, **dadurch gekennzeichnet, dass** die erste Kältemenge (P1+P2) durch den Kühler und eventuell das zusätzliche Kühlsystem bereitgestellt wird, die zweite Kältemenge (P1) durch den Kühler und eventuell das zusätzliche Kühlsystem bereitgestellt wird.

14. Fahrzeug nach Anspruch 12 oder 13, **dadurch gekennzeichnet, dass** die erste Kältemenge die Summe aus der ersten maximalen Kühlleistung (P1), die durch den Kühler bereitgestellt wird, und der zweiten maximalen Kühlleistung (P2), die durch das zusätzliche Kühlsystem bereitgestellt wird, ist, wobei die zweite Kältemenge ausschließlich aus der ersten maximalen Kühlleistung (P1) besteht, die durch den Kühler bereitgestellt wird.

15. Verfahren zur Kühlung mindestens eines Motors eines Fahrzeugs nach einem beliebigen der Ansprüche 12 bis 14, wobei das Verfahren einen Schritt des Kühlens des Motors mit einer ersten Kältemenge (P1+P2) während einer ersten Betriebsphase des Fahrzeugs und einen Schritt des Kühlens des Motors mit einer zweiten Kältemenge (P1) während einer zweiten Betriebsphase des Fahrzeugs beinhaltet, wobei die erste Kältemenge größer als die zweite Kältemenge ist, und dass sich die erste Betriebsphase des Fahrzeugs chronologisch vor oder nach der zweiten Betriebsphase des Fahrzeugs befindet.

16. Verfahren nach Anspruch 15, **dadurch gekennzeichnet, dass** die erste Betriebsphase des Fahrzeugs eine erste bestimmte Dauer, beispielsweise während einer Phase des Abhebens, aufweist, die zwischen einer und zehn Minuten beträgt, die zweite Betriebsphase beispielsweise eine Phase eines stabilen Flugs beinhaltet, die eine zweite Dauer aufweist, die zwischen fünf Minuten und mehreren Stunden beträgt.

## Claims

1. Drive device, notably for a flying vehicle such as an aircraft or spacecraft, comprising at least one motor (2) and a device for cooling the motor (2), the device for cooling the motor (2) comprising a cryogenic refrigerator, which is to say one that operates at a temperature of between minus 100 degrees centigrade and minus 273 degrees centigrade, the refrigerator comprising a working circuit (10) forming a loop and containing a working fluid, the working circuit (10) forming a cycle comprising, in series: a mechanism (4) for compressing the working fluid, a mechanism (5) for cooling the working fluid, a mechanism (16) for expanding the working fluid, and a mechanism (5, 7) for heating the working fluid, the refrigerator comprising a heat-exchange portion (7) for exchange of heat between the working fluid expanded in the expansion mechanism (16) and the motor (2), the refrigerator being configured to produce a determined first maximum refrigeration power (P1), wherein the device for cooling the motor (2) further comprises an additional refrigeration system distinct from the mechanism (5) for cooling the working fluid and distinct from the working fluid and comprising a store (8) of cryogenic fluid comprising a fluid that is liquefied and/or in the solid state that can be brought into a heat-exchange relationship with the refrigerator and optionally with the motor (2), the additional refrigeration system comprising a transfer circuit (9) transferring the cryogenic fluid into a heat-exchange relationship with the refrigerator and optionally with the motor (2), the transfer circuit (9) of the additional refrigeration system comprising a portion in a heat-exchange relationship with the circuit (10) of the working fluid, with at least one heat exchanger (5) for heating and/or cooling the working fluid of the working circuit (10), the additional refrigeration system being configured to supply a determined second maximum refrigeration power (P2) to the refrigerator and to the motor (2) when the cryogenic fluid is brought into a heat-exchange relationship with the refrigerator and optionally with the motor (2), **characterized in that** the additional refrigeration system can be switched over between a first configuration supplying, during operation of the drive device, the second maximum refrigeration power (P2) to the refrigerator by injecting cryogenic fluid for exchange of heat with the at least one heat exchanger (5), and a second configuration supplying, during operation of the drive device, the refrigerator with a cooling power that is zero by not injecting fluid and not exchanging heat with the exchanger (5).

2. Device according to Claim 1, **characterized in that** the working circuit (10) comprises several heat exchangers (5) for heating and/or cooling the working fluid and which are arranged in series, and **in that** the transfer circuit (9) of the additional refrigeration system comprises a portion in a heat-exchange relationship with said in-series heat exchangers (5).

3. Device according to either one of Claims 1 and 2, **characterized in that** the transfer circuit (9) of the additional refrigeration system comprises an upstream end connected to the store (8) of cryogenic fluid and a downstream end connected to a discharge zone.

4. Device according to any one of Claims 1 to 3, **characterized in that** the additional refrigeration system comprises a bypass portion (14) bypassing the working circuit (10) and in a heat-exchange relationship with the cryogenic fluid of the store (8) and a distribution system (15) distributing at least a part of the working fluid of the working circuit (10) into said bypass portion (14).

5. Device according to any one of Claims 1 to 4, **characterized in that** the additional refrigeration system is configured to increase only briefly the refrigeration power of the device for cooling the motor (2), which is to say that the first maximum refrigeration power (P1) is less than the sum of the first maximum refrigeration power (P1) and of the second maximum refrigeration power (P2) .

6. Device according to any one of Claims 1 to 5, **characterized in that** the first maximum refrigeration power (P1) is comprised between 40 and 80% and preferably between 50 and 70% of the sum of the first maximum refrigeration power (P1) and of the second maximum refrigeration power (P2).

7. Device according to any one of Claims 1 to 6, **characterized in that** the store (8) of cryogenic fluid of the additional refrigeration system contains at least one of the following: hydrogen, nitrogen, neon, helium in the liquid and/or solid state.

8. Device according to any one of Claims 1 to 7, **characterized in that** the motor (2) is of the superconducting type.

9. Device according to any one of Claims 1 to 8, **characterized in that** it comprises an electronic controller (100) connected to the device for cooling the motor (2) and configured to control the refrigeration power supplied to the motor (2) by the refrigerator and by the additional refrigeration system.

10. Device according to Claim 9, **characterized in that** the electronic controller (100) is configured to regulate the level of refrigeration power of the refrigerator and of the additional refrigeration system as a function of a setpoint signal (11).

11. Flying vehicle comprising a drive device according to any one of Claims 1 to 10.

12. Vehicle according to Claim 11, **characterized in that** the device for cooling the motor (2) is configured to supply a first amount of cold (P1+P2) to cool the motor (2) during a first phase of operation of the vehicle, notably during a takeoff/lift-off phase, and to supply a second amount of cold (P1) to cool the motor (2) during a second phase of operation of the vehicle, notably during a phase of steady-state flight, the first amount of cold (P1+P2) being greater than the second amount of cold (P1).

13. Vehicle according to Claim 12, **characterized in that** the first amount of cold (P1+P2) is supplied by the refrigerator and possibly the additional refrigeration system, the second amount of cold (P1) is supplied by the refrigerator and possibly the additional refrigeration system.

14. Vehicle according to Claim 12 or 13, **characterized in that** the first amount of cold is the sum of the first maximum refrigeration power (P1) supplied by the refrigerator and of the second maximum refrigeration power (P2) supplied by the additional refrigeration system, the second amount of cold consisting only of the first maximum refrigeration power (P1) supplied by the refrigerator.

15. Method for cooling at least a motor of a vehicle according to any one of Claims 12 to 14, the method comprising a step of cooling the motor with a first amount of cold (P1+P2) during a first phase of operation of the vehicle and a step of cooling the motor with a second amount of cold (P1) during a second phase of operation of the vehicle, the first amount of cold being greater than the second amount of cold, and in that the first phase of operation of the vehicle is situated chronologically before or after the second phase of operation of the vehicle.

16. Method according to Claim 15, **characterized in that** the first phase of operation of the vehicle has a determined first duration, for example during a takeoff/lift-off phase comprised between one and ten minutes, the second phase of operation comprises, for example, a phase of steady-state flight having a second duration comprised between five minutes and several hours.
